# EUROPEAN PATENT APPLICATION

(11) **EP 4 751 889 A1**
(43) Date of publication of application: **03.06.2026**
(21) Application number: 24858539.0
(22) Date of filing: 26.08.2024
(51) Int. Cl.: B29C 64/386, B29C 64/321, B29C 64/245, B29C 64/205, B29C 64/295, B33Y 30/00, B33Y 50/00, B33Y 40/00

(54) **MATERIAL LINE CONVEYING APPARATUS FOR 3D PRINTING DEVICE, AND 3D PRINTING DEVICE**

(30) Priority: 25.08.2023 CN 202311086928
(71) Applicant: Shenzhen Tuozhu Technology Co., Ltd., Shenzhen, Guangdong 518066 (CN)
(72) Inventor: LIU, Li, Shenzhen, Guangdong 518066 (CN); LIU, Yiming, Shenzhen, Guangdong 518066 (CN)
(74) Representative: Grünecker Patent- und Rechtsanwälte PartG mbB
(86) International application number: PCT/CN2024/114636
(87) International publication number: WO 2025/045003

(57) **Abstract**

The present application discloses a filament feeding apparatus for a 3D printer and a 3D printer. The filament feeding apparatus for a 3D printer comprises: a filament housing; a fixed tube and a sliding block, wherein one end of the fixed tube is connected to one end of a feed tube, the other end of the feed tube is connected to a feed assembly, a buffer chamber is formed within the sliding block, one end of the sliding block distal to the feed tube is further connected to one end of an extrusion tube interconnected to the buffer chamber, and the other end of the extrusion tube is coupled to an extrusion assembly; and a first elastic member and a second elastic member.

## Description

### CROSS-REFERENCE TO RELATED APPLICATION

The present application claims priority to Chinese Patent Application No. 202311086928.1, filed on August 25, 2023 and entitled "FILAMENT RESISTANCE DETECTION APPARATUS, PRINTING HEAD OF THREE-DIMENSIONAL PRINTER, AND THREE-DIMENSIONAL PRINTER", the content of which is incorporated herein by reference in its entirety.

### TECHNICAL FIELD

The present application relates to the technical field of printers, and in particular, to a filament feeding apparatus for a 3D printer and a 3D printer with the filament feeding apparatus for a 3D printer.

### BACKGROUND

For a 3D printer provided with a filament dry box, the motion path of a filament from the filament dry box to a printing head is relatively long, and the resistance to motion is relatively large. In addition, when the 3D printer is working, the resistance to motion of the filament increases due to various reasons. Besides the out-of-sync motors, there are other reasons such as a jam in the filament dry box and filament tangling, which sometimes cause larger resistance to motion of the filament. When the resistance to motion of the filament increases to a certain extent, problems such as insufficient extrusion of the filament and slipping of an extrusion wheel are caused, affecting the final printing result or leading to printing failure. Therefore, there is room for improvement.

### SUMMARY

The present application is intended to at least solve one of the technical problems in the prior art. Therefore, one objective of the present application is to propose a filament feeding apparatus for a 3D printer. The filament feeding apparatus for a 3D printer can buffer the motion of a filament when the filament is properly fed, to change the length of the motion path of the filament. This can buffer the stress on the filament caused by out-of-sync extruders at both ends of the filament, to improve production efficiency and product quality, and can buffer the motion of a sliding block, to ensure steady motion of the sliding block. The overall structure is simple and easy to operate and implement. In addition, the filament feeding apparatus proposed in the present application further has a buffering function against tangling, that is, when the resistance to the filament is too large, the length of the motion path of the filament can also be changed, to prevent the filament from breakage due to the excessive resistance. In the present application, two elastic members with different coefficients of elasticity are used, such that buffering for proper filament feeding and buffering against tangling do not interfere with each other.

The filament feeding apparatus for a 3D printer according to the embodiments of the present application includes: a filament housing; a fixed tube and a sliding block, where the fixed tube is mounted to the filament housing, one end of the fixed tube is connected to one end of a feed tube, the other end of the feed tube is connected to a feed assembly, the sliding block is slidably mounted to the filament housing, a buffer chamber interconnected to the fixed tube is formed within the sliding block, one end of the sliding block distal to the feed tube is further connected to one end of an extrusion tube interconnected to the buffer chamber, and the other end of the extrusion tube is coupled to an extrusion assembly; and a first elastic member and a second elastic member, where a coefficient of elasticity of the first elastic member is greater than a coefficient of elasticity of the second elastic member, where the first elastic member abuts against the fixed tube and a side of the sliding block facing the feed tube in between, and the second elastic member abuts against the filament housing and a side of the sliding block facing the extrusion tube in between, or both the first elastic member and the second elastic member are arranged between the fixed tube and the sliding block, and the first elastic member is nested inside the second elastic member.

In the filament feeding apparatus for a 3D printer according to the embodiments of the present application, the motion of a filament during proper filament feeding can be buffered by arranging the second elastic member, and the deformation amount of the second elastic member can change a length of a motion path of the filament. Because the motion path of the filament is relatively long, a plurality of extrusion assemblies are generally necessary on the motion path of the filament. Since the extrusion assembly is driven by a motor, if the synchronization control between two motors is not well performed, forces between the feed assembly and the extrusion assembly is not synchronized, causing filament dragging. However, in the present application, the second elastic member can be configured to buffer the stress on the filament, thereby reducing the difficulty of control, and improving production efficiency and product quality. In addition, the filament feeding apparatus proposed in the present application further has a buffering function against tangling. Buffering against tangling is different from buffering during proper feeding, and involves excessive resistance to the filament due to reasons such as a jam in a filament dry box and filament tangling other than out-of-sync motors. In this case, the deformation amount of the first elastic member can change the length of the motion path of the filament, to prevent the filament from breakage due to the excessive resistance. The motion of the sliding block can be buffered by arranging the first elastic member and the second elastic member, and the steady motion of the sliding block can be ensured regardless of positions at which the first elastic member and the second elastic member are arranged in the filament feeding apparatus for a 3D printer. The overall structure is simple and easy to operate and implement. That is, the filament feeding apparatus in the present application can integrate the buffering for filament feeding with the buffering against filament tangling, bringing in a simple and compact structure.

The filament feeding apparatus for a 3D printer according to some embodiments of the present application further includes: a first detection member and a first trigger piece, where the first detection member is arranged on one of the filament housing and the sliding block, the first trigger piece is arranged on the other of the sliding block and the filament housing, and the first detection member is configured to detect a relative distance to the first trigger piece or a change in the relative distance, to detect a relative distance between the extrusion assembly and the feed assembly or a change in the relative distance. In the present application, the change in the relative distance between the extrusion assembly and the feed assembly can be detected, to determine whether the resistance to the filament increases. Moreover, with the first elastic member, a greater change in the relative distance indicates larger resistance. Therefore, the magnitude of the resistance can be determined, to prevent printing defects or failure. Further, a shorter relative distance between the extrusion assembly and the feed assembly due to excessive resistance can buffer the impact caused by the excessive resistance, and provide time for timely response during high-speed printing.

In the filament feeding apparatus for a 3D printer according to some embodiments of the present application, the first elastic member is in a compressed state, and/or the second elastic member is in a compressed state. To implement the present application, when the filament feeding apparatus is not working, the two elastic members can delimit an initial position of the sliding block. That the filament feeding apparatus is not working can be understood as that the feed assembly is not feeding the filament, and the extrusion assembly is not extruding the filament.

In the filament feeding apparatus for a 3D printer according to some embodiments of the present application, in a case that the first elastic member is nested inside the second elastic member, a sliding distance exists between the sliding block and the filament housing. In this case, during proper filament feeding, if an extrusion speed of the extrusion assembly is less than a speed of the feed assembly, and the motion path of the filament needs to become longer, the second elastic member may be in a stretched state.

The filament feeding apparatus for a 3D printer according to some embodiments of the present application further includes a second detection member and a second trigger piece, where a fixed tube is formed inside an end, connected to the feed tube, of the fixed tube; and the second detection member is fixed relative to the fixed tube, and the second trigger piece is movably mounted to the fixed tube in a direction perpendicular to an axial direction of the fixed tube and at least partially extends into the fixed tube, where a filament is fed in the fixed tube along the axial direction of the fixed tube.

In the filament feeding apparatus for a 3D printer according to some embodiments of the present application, the second detection member is configured to detect a relative distance to the second trigger piece or a change in the relative distance, to detect whether the filament enters the fixed tube. The filament feeding apparatus for a 3D printer according to some embodiments of the present application further includes an elastic reset member, where one end of the elastic reset member is fixed relative to the fixed tube, and the other end of the elastic reset member is connected to the second trigger piece.

In the filament feeding apparatus for a 3D printer according to some embodiments of the present application, the second trigger piece is formed with a sloping push portion, the sloping push portion extends into the fixed tube, the sloping push portion is formed with a sloping push surface, and the sloping push surface is arranged as sloping along a direction of filament feeding.

The filament feeding apparatus for a 3D printer according to some embodiments of the present application further includes a press-fit connector, where the press-fit connector is configured to connect the sliding block and the extrusion tube, the press-fit connector comprises a press-to-release portion, the filament housing is provided with an exposed opening along an axial direction of the extrusion tube, and a diameter of the exposed opening is greater than a diameter of the press-to-release portion.

In the filament feeding apparatus for a 3D printer according to some embodiments of the present application, the sliding block is further provided with a push lug, and the push lug extends out of the filament housing along a direction perpendicular to the axial direction of the extrusion tube.

In the filament feeding apparatus for a 3D printer according to some embodiments of the present application, the filament housing is further formed with limiting ribs, the limiting ribs are in two groups and spaced apart from each other, and the sliding block is limited between the two groups of limiting ribs and is slidable along the limiting ribs.

In the filament feeding apparatus for a 3D printer according to some embodiments of the present application, each group of the limiting ribs includes a first rib and a second rib, the first rib and the second rib are spaced apart from each other along a sliding direction of the sliding block and form an in-between gap, where the sliding block suitably slides in from an end of the second rib distal to the first rib, and a sum of an extension length of the first rib and a length of the in-between gap is less than an extension length of the sliding block.

In the filament feeding apparatus for a 3D printer according to some embodiments of the present application, the filament housing is further provided with a first limiting portion, and the sliding block, when moving toward the feed tube and reaching a limit position, presses against the first limiting portion.

In the filament feeding apparatus for a 3D printer according to some embodiments of the present application, the first limiting portion is configured as a triangular block and is formed with an avoidance slope, and the avoidance slope is configured as sloping along a feeding direction of the fixed tube.

In the filament feeding apparatus for a 3D printer according to some embodiments of the present application, the first trigger piece has a first sensing end and a second sensing end, the first sensing end and the second sensing end are spaced apart from each other along the sliding direction of the sliding block, and the first detection member is located between the first sensing end and the second sensing end, where the first detection member generates a first tangling signal when the sliding block moves toward the feed tube and reaches the limit position, and the first detection member generates a second tangling signal when the sliding block moves toward the extrusion tube and reaches a limit position.

The present application further proposes a 3D printer.

The 3D printer according to the embodiments of the present application includes a feed assembly, an extrusion assembly, and the filament feeding apparatus for a 3D printer according to any one of the foregoing embodiments, where the feed assembly is interconnected to the feed tube, and the extrusion assembly is interconnected to the extrusion tube.

The 3D printer according to some embodiments of the present application further includes a control module, where the feed assembly is provided with a feeding driving member, and the extrusion assembly is provided with an extrusion driving member, where the control module is configured to control an action of the feeding driving member and/or the extrusion driving member.

In the 3D printer according to some embodiments of the present application, two filament feeding apparatuses for a 3D printer are provided, and the two filament feeding apparatuses for a 3D printer are arranged side by side.

The 3D printer according to some embodiments of the present application further includes an enclosure, where the filament feeding apparatuses for a 3D printer are located on an inner side of the enclosure. Optionally, a first limiting portion is provided corresponding to the enclosure at a second rib of the filament feeding apparatus for a 3D printer. A position of the first limiting portion is closer to the second rib than a position at which the sliding block slides in, such that the sliding block can be prevented from moving toward the feed tube and sliding off a filament housing when tangling happens.

In the 3D printer according to some embodiments of the present application, the enclosure is provided with a door for opening up and closing, the sliding block is provided with a push lug, and the push lug protrudes toward the door.

The 3D printer has the same advantages over the prior art as the filament feeding apparatus for a 3D printer described above, which will not be described herein again.

The additional aspects and the advantages of the present application will be partially provided in the following description, will partially become apparent from the following description, or will be learned through the practice of the present application.

### BRIEF DESCRIPTION OF THE DRAWINGS

The above and/or additional aspects and advantages of the present application will become apparent and readily understood from the following descriptions of embodiments in conjunction with the accompanying drawings, in which:
FIG. 1 is a first partial section view of a 3D printer according to an embodiment of the present application;
FIG. 2 is a second partial section view of a 3D printer according to an embodiment of the present application;
FIG. 3 is a third partial section view of a 3D printer according to an embodiment of the present application;
FIG. 4 is a fourth partial section view of a 3D printer according to an embodiment of the present application;
FIG. 5 is a schematic section view of two filament feeding apparatuses according to an embodiment of the present application;
FIG. 6 is a structural schematic view of two filament feeding apparatuses according to an embodiment of the present application;
FIG. 7 is a fifth partial section view of a 3D printer according to an embodiment of the present application;
FIG. 8 is a structural schematic view of a filament resistance detection apparatus according to the present application; and
FIG. 9 is a structural schematic view of a printing head of a three-dimensional printer according to the present application.

### Reference numerals:

filament feeding apparatus 100 for 3D printer, 3D printer 200,
filament housing 1, exposed opening 101, limiting rib 102, first rib 1021, second rib 1022, in-between gap 1023, first limiting portion 103, avoidance slope 1031, fixed tube 2, sliding block 3, buffer chamber 31, push lug 32, feed tube 4, first elastic member 6, second elastic member 7, first detection member 8, first trigger piece 9, first sensing end 91, second sensing end 92, second detection member 10, second trigger piece 11, sloping push portion 111, sloping push surface 112, elastic reset member 13, press-fit connector 14, press-to-release portion 141, air pipe connector 15, enclosure 201, extrusion assembly 202, extrusion mechanism 110, receiving chamber 120, feed assembly 203, feed channel 210, elastic element 300, trigger element 400, detection element 500, filament tube 600, feed port 700 of the feeding apparatus, filament resistance detection apparatus 800, and hot end 900.

### DETAILED DESCRIPTION

The embodiments of the present application are described in detail hereinafter, with examples of the embodiments illustrated in the accompanying drawings. Throughout the accompanying drawings, the same or similar reference numbers indicate the same or similar elements or elements having the same or similar functions. The embodiments described hereinafter with reference to the accompanying drawings are exemplary and merely used to explain the present application, and they should not be construed as limiting the present application.

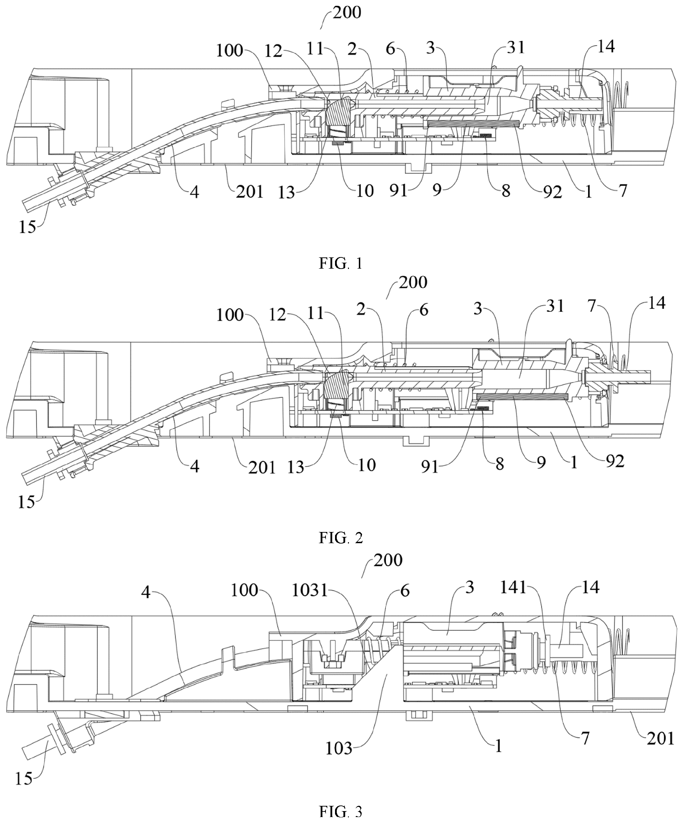

A filament feeding apparatus 100 for a 3D printer according to an embodiment of the present application is described below with reference to FIGs. 1 to 7. The apparatus can buffer the motion of a filament, to change a length of a motion path of the filament and reduce resistance to motion of the filament, thereby improving production efficiency and product quality. The motion of a sliding block 3 can be buffered by arranging a first elastic member 6 and a second elastic member 7, and the steady motion of the sliding block 3 can be ensured. The overall structure is simple and easy to operate and implement.

As shown in FIGs. 1 to 4, the filament feeding apparatus 100 for a 3D printer according to one embodiment of the present application includes: a filament housing 1, a fixed tube 2, the sliding block 3, the first elastic member 6, and the second elastic member 7.

The fixed tube 2 is mounted to the filament housing 1, one end of the fixed tube 2 is connected to one end of a feed tube 4, the other end of the feed tube 4 is connected to a feed assembly 203, the sliding block 3 is slidably mounted to the filament housing 1, a buffer chamber 31 interconnected to the fixed tube 2 is formed within the sliding block 3, one end of the sliding block 3 distal to the feed tube 4 is further connected to one end of an extrusion tube interconnected to the buffer chamber 31, and the other end of the extrusion tube is coupled to an extrusion assembly 202. For the first elastic member 6 and the second elastic member 7, a coefficient of elasticity of the first elastic member 6 is greater than a coefficient of elasticity of the second elastic member 7, where the first elastic member 6 abuts against the fixed tube 2 and a side of the sliding block 3 facing the feed tube 4 in between, and the second elastic member 7 abuts against the filament housing 1 and a side of the sliding block 3 facing the extrusion tube in between, or both the first elastic member 6 and the second elastic member 7 are arranged between the fixed tube 2 and the sliding block 3, and the first elastic member 6 is nested inside the second elastic member 7 (not shown in the figure).

Specifically, the filament housing 1 is configured to provide a place for mounting components of the filament feeding apparatus 100 for a 3D printer, and protect the components. As the fixed tube 2 is mounted to the filament housing 1, the mounting of the fixed tube 2 is fulfilled, and the fixed tube 2 allows a filament to pass through. That is, the fixed tube 2 can be configured to feed the filament. As one end of the fixed tube 2 is connected to the feed tube 4, and the other end of the feed tube 4 can be connected to the feed assembly 203 by using an air pipe connector 15, the feed assembly 203 can be connected to the fixed tube 2 through an air inlet pipe, such that a filament in the feed assembly 203 can enter the fixed tube 2 via the feed tube 4 and be fed into other places through the fixed tube 2. In this case, a path between the feed assembly 203 and the fixed tube 2 has a fixed length.

Meanwhile, the sliding block 3 is further provided inside the filament housing 1. The sliding block 3 can slide relative to the filament housing 1, and the buffer chamber 31 interconnected to the fixed tube 2 is formed within the sliding block 3. That is, the other end of the fixed tube 2 can be interconnected to the buffer chamber 31, such that the filament in the feed assembly 203 can further enter the buffer chamber 31. In addition, at the end of the sliding block 3 distal to the feed tube 4, the buffer chamber 31 can further be interconnected to one end of the extrusion tube. That is, the buffer chamber 31 can be connected to both the fixed tube 2 and the extrusion tube, such that the filament entering the buffer chamber 31 from the fixed tube 2 can enter the extrusion tube. Moreover, the other end of the extrusion tube is coupled to the extrusion assembly 202. That is, the other end of the extrusion tube can be connected to the extrusion assembly 202, which means that the buffer chamber 31 can be connected to the extrusion assembly 202 through the extrusion tube, such that the filament in the buffer chamber 31 can be fed from the extrusion tube into the extrusion assembly 202, thereby satisfying usage requirements of users. In this case, a path between the end of the sliding block 3 connected to the extrusion tube and the extrusion tube also has a fixed length.

Further, the feed assembly 203, the feed tube 4, the fixed tube 2, the buffer chamber 31, the extrusion tube, and the extrusion assembly 202 can be connected in sequence. The feed assembly 203 can provide a filament, such that the filament can be fed into the extrusion assembly 202 through the feed tube 4, the fixed tube 2, the buffer chamber 31, and the extrusion tube in sequence, to satisfy the usage requirements of users. In addition, during the filament feeding from the feed assembly 203 to the extrusion assembly 202, the filament can be first fed into the buffer chamber 31 of the sliding block, and the sliding block slides inside the filament housing to change the length of the motion path of the filament. The path of the filament feeding includes the feed assembly 203 to the fixed tube by connection through the feed tube, the fixed tube to the sliding block, and the sliding block to the extrusion assembly 202 by connection through the extrusion tube. Since the feed tube and the extrusion tube both have a fixed length, as the sliding block slides inside the filament housing to change a distance between the fixed tube and the sliding block, the length of the filament feeding path can be changed.

In addition, the first elastic member 6 and the second elastic member 7 are further provided in the filament feeding apparatus 100 for a 3D printer. The coefficient of elasticity of the first elastic member 6 is configured to be greater than the coefficient of elasticity of the second elastic member 7, that is, the first elastic member 6 can be subject to a greater acting force. Both the first elastic member 6 and the second elastic member 7 can be configured as springs. Different spring constants mean different deformation amounts with a same acting force. Therefore, different spring constants of the two elastic members can distinguish between proper feeding and tangling. For example, during proper feeding, the feed assembly 203 feeds a filament to the extrusion assembly 202, a motion path of the filament needs to become longer, and the sliding block compresses the second elastic member 7; and when the feed assembly 203 is not feeding a new filament, but the extrusion assembly 202 continues to extrude, the motion path of the filament needs to become shorter, and the second elastic member 7 can recover the deformation with its own elasticity in this case. In a case of proper feeding, feeding of a new filament can be proceeded when the sliding block returns to the vicinity of an initial position, and the first elastic member 6 does not work during proper feeding. However, in a case of tangling, the resistance to the filament continues to increase, and the sliding block compresses the first elastic member 6, bringing relatively large resistance to tangling. Therefore, the first elastic member 6 with a larger spring constant is selected as a component for buffering against tangling.

The first elastic member 6 can abut against the fixed tube 2 and a side of the sliding block 3 facing the feed tube 4 in between, that is, the first elastic member 6 can be arranged between the fixed tube 2 and the sliding block 3. The second elastic member 7 can abut against the filament housing 1 and a side of the sliding block 3 facing the extrusion tube in between, that is, the second elastic member 7 can be arranged between the sliding block 3 and the extrusion tube. In other words, the first elastic member 6 and the second elastic member 7 can be arranged at two ends of the sliding block 3 respectively. When a filament is not being fed, the sliding block 3 is in a free state, and the first elastic member 6 and the second elastic member 7 are relatively balanced at the two ends of the sliding block 3. When a filament is being properly fed, the filament enters the buffer chamber 31 and push the sliding block 3 to slide toward the extrusion tube. In this case, the second elastic member 7 can be compressed to buffer the motion of the sliding block 3, such that the sliding block 3 can slide steadily. When resistance to motion of the filament is too large, a less amount of filament enters the buffer chamber 31, or even no filament enters the buffer chamber 31, which means that a pushing force of the filament on the sliding block 3 becomes smaller or even disappears. The second elastic member 7 can push the sliding block 3 to slide toward the feed tube 4 with its own resilience.

In this case, the first elastic member 6 can be compressed to buffer the motion of the sliding block 3, such that the sliding block 3 can slide steadily.

Alternatively, both the first elastic member 6 and the second elastic member 7 can be arranged between the fixed tube 2 and the sliding block 3, and the first elastic member 6 can be nested inside the second elastic member 7, to ensure proper working of both the first elastic member 6 and the second elastic member 7. For example, the first elastic member 6 may be fixedly connected to the fixed tube 2, and the second elastic member 7 may be fixedly connected to both the fixed tube 2 and the sliding block 3. When a filament is not being fed, both the first elastic member 6 and the second elastic member 7 are in a balanced state. When a filament is being properly fed, the filament pushes the sliding block 3 to move toward the extrusion tube. In this case, the second elastic member 7 can be stretched to buffer the motion of the sliding block 3. When resistance to motion of the filament is too large, the sliding block 3 can move toward the feed tube 4 under the action of the second elastic member 7. In this case, the first elastic member 6 can be compressed to buffer the motion of the sliding block 3.

It should be noted that, the coefficient of elasticity of the first elastic member 6 is configured to be greater than the coefficient of elasticity of the second elastic member 7, such that the first elastic member 6 can be subject to an elastic force from the second elastic member 7. That is, regardless of whether the first elastic member 6 and the second elastic member 7 are arranged at the two ends of the sliding block 3 respectively or both the first elastic member 6 and the second elastic member 7 are arranged between the fixed tube 2 and the sliding block 3, it can be ensured that the first elastic member 6 is subject to the elastic force from the second elastic member 7, thereby ensuring the reliability of buffering the motion of the sliding block 3 by using the first elastic member 6 and the second elastic member 7.

In the filament feeding apparatus 100 for a 3D printer according to the embodiments of the present application, the motion of the filament can be buffered by arranging the buffer chamber 31, to change the length of the motion path of the filament and reduce the resistance to motion of the filament, thereby improving production efficiency and product quality. The motion of the sliding block 3 can be buffered by arranging the first elastic member 6 and the second elastic member 7, and the steady motion of the sliding block 3 can be ensured regardless of positions at which the first elastic member 6 and the second elastic member 7 are arranged in the filament feeding apparatus 100 for a 3D printer. The overall structure is simple and easy to operate and implement.

In some embodiments, the filament feeding apparatus 100 for a 3D printer further includes: a first detection member 8 and a first trigger piece 9. The first detection member 8 is arranged on one of the filament housing 1 and the sliding block 3, the first trigger piece 9 is arranged on the other of the sliding block 3 and the filament housing 1, and the first detection member 8 is configured to detect a relative distance to the first trigger piece 9 or a change in the relative distance, to detect a relative distance between the extrusion assembly 202 and the feed assembly 203 or a change in the relative distance.

Specifically, the first detection member 8 and the first trigger piece 9 are arranged in the filament feeding apparatus 100 for a 3D printer, and the first detection member 8 can detect the relative distance to the first trigger piece 9. To be specific, the first detection member 8 can be configured to detect the relative distance between the first detection member 8 and the first trigger piece 9 or the change in the relative distance. The first detection member 8 may be arranged on the filament housing 1, and the first trigger piece 9 may be arranged on the sliding block 3, or the first detection member 8 may be arranged on the sliding block 3, and the first trigger piece 9 may be arranged on the filament housing 1. Both manners can fulfill the arrangement of the first detection member 8 and the first trigger piece 9. In addition, the sliding block 3 can drive the first detection member 8 or the first trigger piece 9 connected to the sliding block 3 to move during its sliding, to change the relative distance between the first detection member 8 and the first trigger piece 9, such that the first detection member 8 can obtain different detection results.

Exemplarily, as shown in FIGs. 1 to 2, the first detection member 8 may be arranged on the filament housing 1, and the first trigger piece 9 may be arranged on the sliding block 3. That is, the first detection member 8 may be fixedly connected to the filament housing 1, and the first trigger piece 9 may be fixedly connected to the sliding block 3, to ensure the reliability of the working of the first detection member 8 and the first trigger piece 9. When the sliding block 3 moves relative to the filament housing 1, the relative distance between the first detection member 8 and the first trigger piece 9 changes, bringing a changed detection result of the first detection member 8. That is, the first detection member 8 can detect the relative distance to the first trigger piece 9 or the change in the relative distance.

Further, when the sliding block 3 moves relative to the filament housing 1, the sliding block 3 approaches the feed tube 4 or the extrusion tube. When the sliding block 3 moves toward the extrusion tube, a distance between the sliding block 3 and the feed assembly 203 increases, that is, a distance between the feed assembly 203 and the extrusion assembly 202 increases; and when the sliding block 3 moves toward the feed tube 4, a distance between the sliding block 3 and the feed tube 4 decreases, that is, a distance between the feed assembly 203 and the extrusion assembly 202 decreases. In other words, during the sliding of the sliding block 3, the relative distance between the first trigger piece 9 connected to the sliding block 3 and the first detection member 8 changes; meanwhile, the distance between the feed assembly 203 and the extrusion assembly 202 also changes, such that the relative distance between the extrusion assembly 202 and the feed assembly 203 or a change in the relative distance can be indirectly detected by the first detection member 8.

In this way, the magnitude of the resistance to motion of the filament can be determined.

In some embodiments, the first elastic member 6 is in a compressed state, and/or the second elastic member 7 is in a compressed state.

Specifically, as shown in FIGs. 1 to 3, when the first elastic member 6 and the second elastic member 7 are arranged at the two ends of the sliding block 3 respectively, during proper feeding, the sliding block 3 can move toward the extrusion tube with a pushing force from the filament. In this case, the sliding block 3 can compress the second elastic member 7, such that the second elastic member 7 is in the compressed state. When the resistance to motion of the filament is too large, the sliding block 3 can move toward the feed tube 4 under the action of the second elastic member 7. In this case, the sliding block 3 can compress the first elastic member 6, such that the first elastic member 6 is in the compressed state.

Alternatively, when both the first elastic member 6 and the second elastic member 7 are arranged between the sliding block 3 and the fixed tube 2, during proper feeding, the sliding block 3 can move toward the extrusion tube with a pushing force from the filament. In this case, the sliding block 3 can stretch the second elastic member 7. When the resistance to motion of the filament is too large, the sliding block 3 can move toward the feed tube 4 under the action of the second elastic member 7. In this case, the sliding block 3 can compress the first elastic member 6 and the second elastic member 7 at the same time.

In some embodiments, in a case that the first elastic member 6 is nested inside the second elastic member 7, a sliding distance exists between the sliding block 3 and the filament housing 1.

Specifically, in the case that the first elastic member 6 is nested inside the second elastic member 7, both the first elastic member 6 and the second elastic member 7 can be arranged between the sliding block 3 and the fixed tube 2. In this case, a specific distance exists between an end of the sliding block 3 facing the extrusion tube and an end of the filament housing 1 facing the extrusion tube. In other words, a sliding distance exists between the sliding block 3 and the filament housing 1, to provide sufficient space for the sliding of the sliding block 3, thereby ensuring that the sliding block 3 can slide toward the extrusion tube with a pushing force from the filament during proper feeding. In some embodiments, the filament feeding apparatus 100 for a 3D printer further includes a second detection member 10 and a second trigger piece 11. A fixed tube 12 is formed inside an end, connected to the feed tube 4, of the fixed tube 2; and the second detection member 10 is fixed relative to the fixed tube 2, and the second trigger piece 11 is movably mounted to the fixed tube 2 in a direction perpendicular to an axial direction of the fixed tube 2 and at least partially extends into the fixed tube 2, where a filament is fed in the fixed tube 2 along the axial direction of the fixed tube 2. Specifically, the second detection member 10 is fixed relative to the fixed tube 2, that is, the second detection member 10 can be fixedly connected to the fixed tube 2; and the second trigger piece 11 is movably mounted to the fixed tube 2 in the direction perpendicular to the axial direction of the fixed tube 2, that is, the second trigger piece 11 can be movably connected to a side wall of the fixed tube 2, and the second trigger piece 11 can move along the direction perpendicular to the axial direction of the fixed tube 2. In addition, the second trigger piece 11 can partially extend into the fixed tube 2, or the second trigger piece 11 can fully extend into the fixed tube 2, to achieve a reliable connection between the second trigger piece 11 and the fixed tube 2.

Moreover, the filament can be fed in the fixed tube 2 along the axial direction of the fixed tube 2, that is, a moving direction of the filament is the axial direction of the fixed tube 2; and the fixed tube 12 is formed inside the end, connected to the feed tube 4, of the fixed tube 2, that is, the fixed tube 12 can be arranged inside an end of the fixed tube 2 proximal to the feed tube 4. At least part of the second trigger piece 11 extends into the fixed tube 2, that is, at least part of the second trigger piece 11 can block the motion of the filament in the fixed tube 2, which means that the filament entering the fixed tube 2 from the feed tube 4 can generate a pushing force on the second trigger piece 11 and push the second trigger piece 11 to move.

In some embodiments, the second detection member 10 is configured to detect a relative distance to the second trigger piece 11 or a change in the relative distance, to detect whether the filament enters the fixed tube 2.

Specifically, the second detection member 10 can detect the relative distance to the second trigger piece 11, that is, the second detection member 10 can be configured to detect the relative distance to the second trigger piece 11 or the change in the relative distance. The second detection member 10 and the second trigger piece 11 may be spaced apart from each other along the direction perpendicular to the axial direction of the fixed tube 2, the second detection member 10 may be fixedly connected to the fixed tube 2, and at least part of the second trigger piece 11 may movably extend into the fixed tube 2. During proper feeding, the filament entering the fixed tube 2 can push the second trigger piece 11, such that the second trigger piece 11 moves toward the second detection member 10, and then the relative distance between the second detection member 10 and the second trigger piece 11 changes, bringing different detection results of the second detection member 10. In this way, whether the filament enters the fixed tube 2 can be determined based on a detection result of the second detection member 10. That is, whether the filament enters the fixed tube 2 can be detected by using the second detection member 10.

In some embodiments, the filament feeding apparatus 100 for a 3D printer further includes an elastic reset member 13, where one end of the elastic reset member 13 is fixed relative to the fixed tube 2, and the other end of the elastic reset member 13 is connected to the second trigger piece 11.

Specifically, the filament in the fixed tube 2 can push the second trigger piece 11 to move toward the second detection member 10. As shown in FIGs. 1 to 2 and FIG. 7, the filament feeding apparatus 100 for a 3D printer is further provided with the elastic reset member 13. The elastic reset member 13 is arranged along the direction perpendicular to the axial direction of the fixed tube 2. One end of the elastic reset member 13 is fixed relative to the fixed tube 2, that is, one end of the elastic reset member 13 and the fixed tube 2 can be fixed relative to each other; and the other end of the elastic reset member 13 is connected to the second trigger piece 11, that is, the other end of the elastic reset member 13 can be fixedly connected to the second trigger piece 11, thereby fulfilling the arrangement of the elastic reset member 13, and ensuring the reliability of the working of the elastic reset member 13.

Exemplarily, as shown in FIGs. 1 to 2 and FIG. 7, the elastic reset member 13 may be arranged between the second detection member 10 and the second trigger piece 11. When the second trigger piece 11 moves toward the second detection member 10 with the pushing force of the filament, the elastic reset member 13 can be compressed. In this case, the elastic reset member 13 can apply, with its own resilience, an elastic force to the second trigger piece 11 for extending into the fixed tube 2, and can push the second trigger piece 11 to move into the fixed tube 2 when the resistance to motion of the filament is too large. The elastic reset member 13 may be configured as a spring.

In some embodiments, the second trigger piece 11 is formed with a sloping push portion 111, the sloping push portion 111 extends into the fixed tube 12, the sloping push portion 111 is formed with a sloping push surface 112, and the sloping push surface 112 is arranged as sloping along a direction of filament feeding.

Specifically, the second trigger piece 11 can move toward the second detection member 10 with the pushing force from the filament; and the second trigger piece 11 is formed with the sloping push portion 111, the sloping push portion 111 extends into the fixed tube 12, and the fixed tube 12 is arranged inside the fixed tube 2, such that the filament entering the fixed tube 2 can push the sloping push portion 111 to move the second trigger piece 11 toward the second detection member 10. Meanwhile, the sloping push portion 111 is formed with the sloping push surface 112, and the contact area between the filament and the sloping push portion 111 can be larger with the sloping push surface 112, to improve the reliability of the filament when pushing the sloping push portion 111 to move. In addition, the sloping push surface 112 is arranged as sloping along the direction of filament feeding, to facilitate the pushing of the filament on the sloping push portion 111 to move via the sloping push surface 112 during feeding, thereby ensuring the reliability of the second trigger piece 11 when moving toward the second detection member 10 under the action of the pushing force of the filament. With the sloping push surface 112, the sloping push portion 111 can be pushed away with a small pushing force, to prevent the trigger piece from blocking filament feeding.

In some embodiments, the filament feeding apparatus 100 for a 3D printer further includes a press-fit connector 14. The press-fit connector 14 is configured to connect the sliding block 3 and the extrusion tube, the press-fit connector 14 includes a press-to-release portion 141, the filament housing 1 is provided with an exposed opening 101 along an axial direction of the extrusion tube, and a diameter of the exposed opening 101 is greater than a diameter of the press-to-release portion 141.

Specifically, the press-fit connector 14 is configured to connect the sliding block 3 and the extrusion tube, that is, the buffer chamber 31 can be interconnected to the extrusion tube by using the press-fit connector 14, thereby ensuring the reliability of the filament when entering the extrusion tube from the buffer chamber 31. In addition, the press-fit connector 14 is connected to the sliding block 3, such that the press-fit connector 14 can be driven by the sliding block 3 to move. Meanwhile, the press-fit connector 14 is provided with the press-to-release portion 141, and the press-to-release portion 141, when pressed, is used for releasing from the extrusion tube, such that the extrusion tube can be removed for maintenance. Moreover, the press-to-release portion 141 can extend to an outer side of the filament housing 1, to facilitate user operations on the press-to-release portion 141.

In addition, the exposed opening 101 is arranged on the filament housing 1. The exposed opening 101 interconnects the inner side to the outer side of the filament housing 1, and allows at least part of the press-fit connector 14 to pass through; and the exposed opening 101 is arranged on the filament housing 1 along the axial direction of the extrusion tube, that is, the exposed opening 101 can be arranged on a motion path of the press-fit connector 14, such that at least part of the press-fit connector 14 can extend out of the exposed opening 101. Moreover, the press-to-release portion 141 is a portion of the press-fit connector 14 with the largest diameter, and the diameter of the exposed opening 101 is configured to be greater than the diameter of the press-to-release portion 141, such that at least part of the press-fit connector 14 can extend out of the exposed opening 101.

It should be noted that, the press-fit connector 14 is configured to connect the sliding block 3 and the extrusion tube. When the extrusion tube needs maintenance, at least part of the press-fit connector 14 including the press-to-release portion 141 can extend to the outer side of the filament housing 1, and then the press-fit connector 14 can be released from the extrusion tube by pressing the press-to-release portion 141. Then, the extrusion tube can be easily pulled out of the press-fit connector 14 for extrusion tube maintenance. This can reduce later-stage maintenance costs.

In some embodiments, the sliding block 3 is further provided with a push lug 32, and the push lug 32 extends out of the filament housing 1 along a direction perpendicular to the axial direction of extrusion tube.

Specifically, the push lug 32 is configured to provide a place for user operations. The push lug 32 extends out of the filament housing 1 along the direction perpendicular to the axial direction of extrusion tube, that is, the push lug 32 can be exposed to a user, to facilitate user operations on the push lug 32. In addition, the push lug 32 is arranged on the sliding block 3, such that the user can operate the sliding block 3 by using the push lug 32, and then operate the press-fit connector 14 on the sliding block 3. Further, when the user applies an acting force to the push lug 32, the acting force applied by the user can be transmitted from the push lug 32 to the press-fit connector 14 via the sliding block 3, such that the push lug 32 can drive the sliding block 3 and the press-fit connector 14 to move together toward the extrusion tube, and then at least part of the press-fit connector 14 including the press-to-release portion 141 can extend to the outer side of the filament housing 1. This facilitates separation of the extrusion tube from the press-fit connector 14 for extrusion tube maintenance/replacement for the user. To be specific, the user can pull out the extrusion tube by pressing the press-to-release portion 141 while pinching the lug 32.

Moreover, it should be noted that, when the extrusion tube needs maintenance, the push lug 32 can be pushed, such that at least part of the press-fit connector 14 including the press-to-release portion 141 can extend out of the filament housing 1, and then the press-to-release portion 141 can be pressed by pinching the push lug 32 and the press-to-release portion 141, to release the press-fit connector 14 from the extrusion tube. Then, the extrusion tube can be easily pulled out of the press-fit connector 14, to remove the extrusion tube for maintenance. This can reduce later-stage maintenance costs.

In some embodiments, the filament housing 1 is further formed with limiting ribs 102, the limiting ribs 102 are in two groups and spaced apart from each other, and the sliding block 3 is limited between the two groups of limiting ribs 102 and is slidable along the limiting ribs 102.

Specifically, the limiting ribs 102 can be configured to limit the sliding block 3, and the limiting ribs 102 are formed on the filament housing 1, such that the limiting ribs 102 can be fixed relative to the filament housing 1, to improve the reliability of the limiting ribs 102 for limiting the sliding block 3; and the limiting ribs 102 are arranged into two groups, such that the sliding block 3 can be limited by the two groups of limiting ribs 102 together, to further improve the reliability of the limiting ribs 102 for limiting the sliding block 3. Meanwhile, the two groups of limiting ribs 102 are spaced apart from each other, such that a specific distance exists between the two groups of limiting ribs 102, to facilitate the limitation of the sliding block 3 between the two groups of limiting ribs 102, and the sliding block 3 can be limited from both sides of the sliding block 3 by using the two groups of limiting ribs 102. Moreover, the sliding block 3 is slidable along the limiting ribs 102 between the two groups of limiting ribs 102, such that the motion of the sliding block 3 can be guided by using the two groups of limiting ribs 102, to improve the accuracy of a moving direction of the sliding block 3.

In some embodiments, each group of the limiting ribs 102 includes a first rib 1021 and a second rib 1022, the first rib 1021 and the second rib 1022 are spaced apart from each other along a sliding direction of the sliding block 3 and form an in-between gap 1023, where the sliding block 3 suitably slides in from an end of the second rib 1022 distal to the first rib 1021, and a sum of an extension length of the first rib 1021 and a length of the in-between gap 1023 is less than an extension length of the sliding block 3.

Specifically, the first rib 1021 and the second rib 1022 are spaced apart from each other along the sliding direction of the sliding block 3, such that the end of the sliding block 3 facing the extrusion tube and the end distal to the extrusion tube can slide along the first rib 1021 and the second rib 1022 respectively, and then the end of the sliding block 3 facing the extrusion tube and the end distal to the extrusion tube can be guided by using two first ribs 1021 and two second ribs 1022 respectively, to effectively improve the reliability of the two groups of limiting ribs 102 for guiding the motion of the sliding block 3. In addition, the in-between gap 1023 is formed between the first rib 1021 and the second rib 1022, to prevent the end of the sliding block 3 distal to the extrusion tube from sliding into a place between the two first ribs 1021, thereby ensuring that the two first ribs 1021 and the two second ribs 1022 can guide the end of the sliding block 3 facing the extrusion tube and the end distal to the extrusion tube respectively.

Moreover, the sliding block 3 slides in from the end of the second rib 1022 distal to the first rib 1021, that is, the end of the sliding block 3 facing the extrusion tube can slide in from the end of the second rib 1022 distal to the first rib 1021, such that the sliding block 3 can be arranged between the two groups of limiting ribs 102; and the sum of the extension length of the first rib 1021 and the length of the in-between gap 1023 is less than the extension length of the sliding block 3, such that when the sliding block 3 slides toward the extrusion tube and reaches a limit position, the end of the sliding block 3 distal to the extrusion tube is not disengaged from the second rib 1022, thereby ensuring the steady motion of the sliding block 3, and preventing the sliding block 3 from being disengaged from the limiting ribs 102.

In some embodiments, the filament housing 1 is further provided with a first limiting portion 103, and the sliding block 3, when moving toward the feed tube 4 and reaching a limit position, presses against the first limiting portion 103.

Specifically, the first limiting portion 103 is configured to limit the sliding block 3 when the sliding block 3 moves to the limit position, and the first limiting portion 103 is arranged inside the filament housing 1, such that the first limiting portion 103 can be fixed relative to the filament housing 1, to ensure the reliability of the first limiting portion 103 for limiting the sliding block 3; and the sliding block 3, when moving toward the feed tube 4 and reaching the limit position, presses against the first limiting portion 103, that is, when the sliding block 3 moves toward the feed tube 4 and reaches the limit position, the first limiting portion 103 can limit the sliding block 3, to prevent the sliding block 3 from being disengaged from the limiting ribs 102 due to an excessively long motion path of the sliding block 3.

In some embodiments, the first limiting portion 103 is configured as a triangular block and is formed with an avoidance slope 1031, and the avoidance slope 1031 is configured as sloping along a feeding direction of the fixed tube.

Specifically, the first limiting portion 103 is configured to limit the sliding block 3 when the sliding block 3 moves toward the feed tube 4 and reaches the limit position. As shown in FIGs. 3 to 4, the first limiting portion 103 can be configured as a triangular block, and the avoidance slope 1031 is formed on the first limiting portion 103. The avoidance slope 1031 is arranged as sloping along the feeding direction of the fixed tube 2, to arrange the avoidance slope 1031 on a side of the triangular block proximal to the feed tube 4, such that the avoidance slope 1031 can be configured to avoid components such as the fixed tube 2 and the second detection member 10, to ensure reliable working of the components such as the second detection member 10. Meanwhile, a side of the first limiting portion 103 facing the sliding block 3 may be a plane, to ensure the reliability of the first limiting portion 103 for limiting the sliding block 3.

It should be noted that, the shape of the first limiting portion 103 is not limited to that described in this embodiment. In actual design, the shape can be flexibly styled on the premise of limiting the sliding block 3 and avoiding the components inside the filament housing 1.

In some embodiments, the first trigger piece 9 has a first sensing end 91 and a second sensing end 92, the first sensing end 91 and the second sensing end 92 are spaced apart from each other along the sliding direction of the sliding block 3, and the first detection member 8 is located between the first sensing end 91 and the second sensing end 92, where the first detection member 8 generates a first tangling signal when the sliding block 3 moves toward the feed tube 4 and reaches the limit position, and the first detection member 8 generates a second tangling signal when the sliding block 3 moves toward the extrusion tube and reaches the limit position.

Specifically, the first trigger piece 9 may cooperate with the first detection member 8 to detect a current position of the sliding block 3. The first trigger piece 9 has the first sensing end 91 and the second sensing end 92, the first sensing end 91 and the second sensing end 92 are spaced apart from each other along the sliding direction of the sliding block 3, and the first trigger piece 9 and the first detection member 8 are spaced apart from each other along a direction perpendicular to the sliding direction of the sliding block 3, that is, both the first sensing end 91 and the second sensing end 92 can be arranged toward the first detection member 8, to facilitate the detection of distances to the first sensing end 91 and the second sensing end 92 by the first detection member 8. In addition, the first detection member 8 is arranged between the first sensing end 91 and the second sensing end 92, such that the first detection member 8 is close to both the first sensing end 91 and the second sensing end 92, thereby facilitating the detection of the distances to the first sensing end 91 and the second sensing end 92 at the same time by the first detection member 8.

Meanwhile, an end proximal to the feed tube 4 may be set as the first sensing end 91, and an end proximal to the extrusion tube may be set as the second sensing end 92. When the sliding block 3 moves toward the feed tube 4 and reaches the limit position, the distance between the first detection member 8 and the first sensing end 91 increases, and the distance between the first detection member 8 and the second detection member 10 decreases, and in this case, the first detection member 8 can generate the first tangling signal; otherwise, when the sliding block 3 moves toward the extrusion tube and reaches the limit position, the distance between the first detection member 8 and the first sensing end 91 decreases, and the distance between the first detection member 8 and the second sensing end 92 increases, and in this case, the first detection member 8 can generate the second tangling signal.

It should be noted that, when the sliding block 3 moves toward the feed tube 4 and reaches the limit position, and the resistance to motion of the filament is too large, the first tangling signal may be a feeding signal; and when the sliding block 3 moves toward the extrusion tube and reaches the limit position, and the filament can be fed properly, the second tangling signal may be a feeding signal. The present application further proposes a 3D printer 200.

The 3D printer 200 according to the embodiments of the present application includes a feed assembly 203, an extrusion assembly 202, and the filament feeding apparatus 100 for a 3D printer according to any one of the foregoing embodiments. The feed assembly 203 is interconnected to the feed tube 4, and the extrusion assembly 202 is interconnected to the extrusion tube.

Specifically, the feed assembly 203 is connected to the feed tube 4, such that a filament can be fed into the feed tube 4 through the feed assembly 203; meanwhile, the extrusion assembly 202 is interconnected to the extrusion tube, such that the filament can be fed into the extrusion assembly 202 through the extrusion tube, to provide the filament for the extrusion assembly 202, satisfying the usage requirements of users. Moreover, the filament feeding apparatus 100 for a 3D printer is arranged between the feed assembly 203 and the extrusion assembly 202, such that the filament can be fed from the feed assembly 203 into the extrusion assembly 202 through the filament feeding apparatus 100 for a 3D printer, and a motion path of the filament can be shortened, to reduce resistance to motion of the filament, thereby improving production efficiency and product quality. The motion of the sliding block 3 can also be buffered, to ensure steady motion of the sliding block 3.

In some embodiments, the 3D printer 200 further includes a control module, where the feed assembly 203 is provided with a feeding driving member, and the extrusion assembly 202 is provided with an extrusion driving member, where the control module is configured to control an action of the feeding driving member and/or the extrusion driving member.

Specifically, the feeding driving member is arranged in the feed assembly 203, and the feeding driving member can provide a driving force for the filament in the feed assembly 203 to feed the filament; and the extrusion driving member is arranged at the extrusion assembly 202, and the extrusion driving member can provide a driving force for the filament at the extrusion assembly 202. That is, reliable filament feeding can be ensured by using the feeding driving member and the extrusion driving member, thereby ensuring a smooth printing process. In addition, the control module may be electrically connected to the first detection member 8, such that the first tangling signal or the second tangling signal generated by the first detection member 8 can be transmitted to the control module, and the control module can control actions of the feeding driving member and the extrusion driving member based on the first tangling signal and the second tangling signal respectively.

Further, the control module may drive the feeding driving member to act based on the first tangling signal, to feed the filament from the feed assembly 203 into the buffer chamber 31, or the control module may drive the extrusion driving member to move based on the second tangling signal, to feed the filament from the buffer chamber 31 to the extrusion assembly 202.

In some embodiments, two filament feeding apparatuses 100 for a 3D printer are provided, and the two filament feeding apparatuses 100 for a 3D printer are arranged side by side.

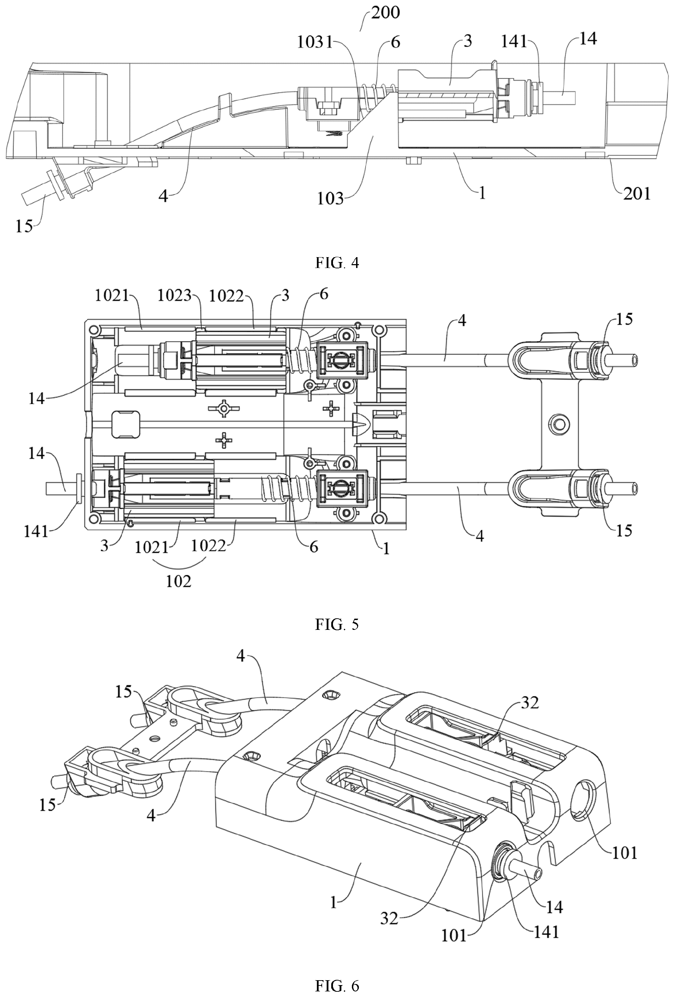

Specifically, the filament feeding apparatuses 100 for a 3D printer are configured to feed a filament. As shown in FIGs. 5 to 6, two filament feeding apparatuses 100 for a 3D printer may be arranged in the 3D printer 200 at the same time, that is, filaments may be fed separately or simultaneously by the two filament feeding apparatuses 100 for a 3D printer. In addition, the two filament feeding apparatuses 100 for a 3D printer are arranged side by side, that is, the two filament feeding apparatuses 100 for a 3D printer may be spaced apart from each other to prevent the inability to feed the filaments due to interference between the two. Further, the two filament feeding apparatuses 100 for a 3D printer may feed a plurality of filaments at the same time, to improve printing efficiency and avoid printing interruption. Moreover, when one of the filament feeding apparatuses is being replaced or repaired, the other filament feeding apparatus 100 for a 3D printer can keep working, thereby reducing the downtime for maintenance. Besides, the two filament feeding apparatuses 100 for a 3D printer can be controlled separately, to improve the flexibility and adaptability during printing.

It should be noted that, in actual design, the filament housings 1 of the two filament feeding apparatuses 100 for a 3D printer may alternatively be integrated.

In some embodiments, the 3D printer 200 further includes an enclosure 201, where the filament feeding apparatuses 100 for a 3D printer are located on an inner side of the enclosure 201. Specifically, the filament feeding apparatuses 100 for a 3D printer are arranged on the inner side of the enclosure 201, such that the enclosure 201 can provide space for arranging the filament feeding apparatuses 100 for a 3D printer, and the enclosure 201 can protect the filament feeding apparatuses 100 for a 3D printer, to prevent damage and failure of the filament feeding apparatuses 100 for a 3D printer due to accidental bumps. In addition, the filament feeding apparatuses 100 for a 3D printer may be arranged toward a front side of the enclosure 201, that is, toward users, to facilitate observation and maintenance of the filament feeding apparatuses 100 for a 3D printer.

In some embodiments, the enclosure 201 is provided with a door for opening up and closing, the sliding block 3 is provided with a push lug 32, and the push lug 32 protrudes toward the door.

Specifically, the door for opening up and closing is arranged on the enclosure 201, such that the enclosure 201 can be opened up or closed by opening up and closing the door. When the enclosure 201 is open, the filament feeding apparatuses 100 for a 3D printer may be arranged or removed, and when the door is closed, the filament feeding apparatuses 100 for a 3D printer can be protected. In addition, the push lug 32 on the sliding block 3 is arranged toward the door, to facilitate user operations on the push lug 32 when the door is open. The sliding block 3 drives the press-fit connector 14 to move by using the push lug 32, and then at least part of the press-fit connector 14 can extend to the outer side of the filament housing 1. This facilitates separation of the extrusion tube from the press-fit connector 14 for extrusion tube maintenance for users.

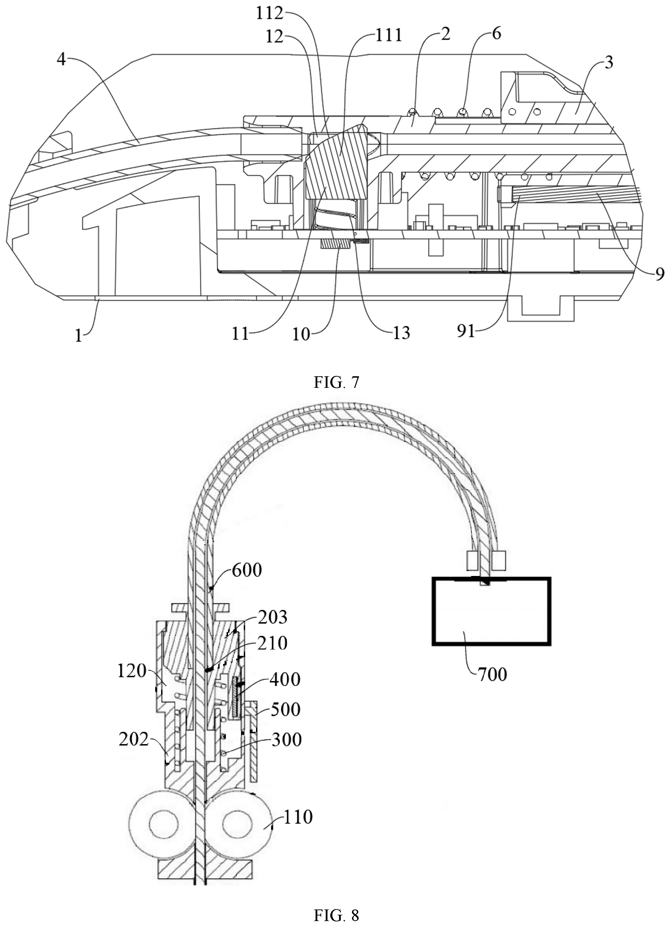

Referring to FIG. 8, a structural schematic view of a filament resistance detection apparatus according to the present application is shown, and the filament resistance detection apparatus may specifically include the following parts:
An extrusion assembly 202 provided with an extrusion mechanism 110 is included. The extrusion mechanism 110 is configured to drive a filament to be fed to the hot end. A heating block on the hot end can heat up the filament for extrusion molding from the hot end to print a three-dimensional model.

A feed assembly 203 provided with a feed channel 210 is included. A feed inlet of the feed channel 210 is configured to receive a filament from a feeding apparatus, a material outlet of the feed channel 210 faces the extrusion assembly 202, and the extrusion assembly 202 is movable relative to the feed assembly 203 along a direction of the filament in the feed channel 210. The filament from the feeding apparatus is fed from a feed port 700 of the feeding apparatus into the feed inlet of the feed channel 210.

The feed channel 210 has at least one feed inlet and one material outlet, that is, the feed channel 210 may be a single-strand feed channel 210 or a multi-strand feed channel 210.

An elastic element 300 is included. One end of the elastic element 300 is connected to the extrusion assembly 202, and the other end is connected to the feed assembly 203. The elastic element 300 is configured to stop the extrusion assembly 202 from approaching the feed assembly 203 in the direction of the filament in the feed channel 210. The elastic element 300 may be arranged between the extrusion assembly 202 and the feed assembly 203.

A trigger element 400 is included and is arranged on one of the extrusion assembly 202 and the feed assembly 203.

A detection element 500 is included and is arranged on the other of the extrusion assembly 202 and the feed assembly 203, and is configured to detect a relative distance between the extrusion assembly 202 and the feed assembly 203 or a change in the relative distance by detecting a relative distance to the trigger element 400.

In some feasible implementations, the filament resistance detection apparatus may be arranged at any position on a path of filament feeding. The trigger element and the detection element may be arranged at any position on the path of filament feeding. For example, the elements may be arranged on a filament dry box, arranged on an enclosure of a 3D printer, or arranged on a filament support. For example, the trigger element 400 is arranged on the extrusion assembly 202, and the detection element 500 is arranged on the feed assembly 203. The trigger element 400 and the detection element 500 are parts arranged in pairs.

A filament is usually wound onto a filament spool in layers, and the end of the filament is fixed to the filament spool. If the filament slides off the filament spool during printing, or the filament cannot be loosened after the filament is used up due to the end fixed to the filament spool, resistance to the filament increases or the filament has a jam. When the resistance to the filament is too large, as the extrusion assembly 202 and the feed assembly 203 can move relative to each other, the magnitude of the resistance to the filament can be determined based on the relative distance between the extrusion assembly 202 and the feed assembly 203.

In an optional implementation of the present application, the feeding apparatus is provided with a filament spool.

In the present application, the feeding apparatus is provided with the filament spool, and a filament is wound onto the filament spool.

In an optional implementation of the present application, the filament on the filament spool is fed from the feed port of the feeding apparatus to the feed inlet of the feed channel 210, and a filament tube 600 is provided between the feed port of the feeding apparatus and the feed inlet of the feed channel 210, such that a length of part of the filament between the feed port of the feeding apparatus and the feed inlet of the feed channel 210 is a length of the filament tube 600.

As the filament tube 600 is arranged, the filament on the filament spool from the feed port of the feeding apparatus is guided by the filament tube 600 and fed to the feed inlet of the feed channel 210. When the resistance to the filament increases, a force that can shorten a distance between the filament spool and the extrusion assembly 202 is generated, and since the length of the filament tube 600 remains the same, the feed assembly 203 approaches the extrusion assembly 202, such that the relative distance between the feed assembly 203 and the extrusion assembly 202 changes. Therefore, a larger resistance to the filament can be determined based on a shorter relative distance between the feed assembly 203 and the extrusion assembly 202. Moreover, with the elastic element 300, a greater change in the relative distance between the feed assembly 203 and the extrusion assembly 202 indicates larger resistance. Therefore, the magnitude of the resistance can be determined. Further, a shorter relative distance between the extrusion assembly 202 and the feed assembly 203 due to excessive resistance can buffer the impact caused by the excessive resistance, and provide time for timely response during high-speed printing.

In an optional implementation of the present application, the extrusion assembly 202 is provided with a receiving chamber 120, and the material outlet of the feed assembly 203 is nested inside the receiving chamber 120.

The receiving chamber 120 is arranged inside the extrusion assembly 202, and the receiving chamber 120 may be an open receiving chamber 120. As shown in FIG. 1, the receiving chamber 120 has no top surface. The material outlet of the feed assembly 203 is nested inside the receiving chamber 120. This structure can stabilize the spatial relationship between the feed assembly 203 and the extrusion assembly 202.

In an optional implementation of the present application, a sliding groove is provided inside the receiving chamber 120, and the sliding groove is configured to guide a direction of relative motion between the extrusion assembly 202 and the feed assembly 203.

As the sliding groove is provided inside the receiving chamber 120, a protrusion on an outer side surface of the feed assembly 203 can be slidably connected to the sliding groove, to guide the direction of the relative motion between the extrusion assembly 202 and the feed assembly 203 when the two move relative to each other, thereby preventing motion misalignment between the extrusion assembly 202 and the feed assembly 203.

Specifically, the sliding groove is an elongated hole, and the trigger element 400 is arranged on the protrusion on the outer side surface of the feed assembly 203. The protrusion protrudes into the sliding groove to be slidably connected to the sliding groove. The detection element 500 may be arranged on the elongated hole. The sliding groove is an opening interconnected to the outside of the receiving chamber, to facilitate detection of the detection element 500.

The sliding groove is an elongated hole, the feed assembly 203 moves along an axial direction of the sliding groove, the trigger element 400 may be arranged on the protrusion on the outer side surface of the feed assembly 203, and the protrusion protrudes into the sliding groove. The detection element 500 is arranged on the elongated hole, such that the detection element 500 can directly detect the relative distance to the trigger element 400 when the feed assembly 203 and the extrusion assembly 202 move relative to each other.

In addition, a limiting member may further be arranged on the receiving chamber 120 of the extrusion assembly 202, to limit a sliding position of the feed assembly 203 when moving away from the extrusion assembly 202. This can prevent the feed assembly 203 from sliding out of the receiving chamber 120. The limiting member may be a slope in contact with the feed assembly 203. The limiting member may alternatively be a cover with a through hole in the receiving chamber 120. The cover may be connected to the receiving chamber 120 by snap-fit, and the through hole may penetrate the middle of the material outlet of the feed assembly 203, while an end of the material outlet of the feed assembly 203 proximal to the extrusion assembly 202 is provided with a protrusion, such that the material outlet cannot be separated from the through hole of the cover. Specifically, a side of the end of the material outlet proximal to the extrusion assembly 202 is provided with the protrusion, and the through hole of the cover is provided with an opening for the protrusion to pass through, such that when the material outlet rotates relative to the cover to a first angle, the protrusion and the opening can be aligned to enable the separation of the material outlet from the through hole, while when the material outlet rotates relative to the cover to a second angle, the material outlet cannot be separated from the through hole of the cover. In addition, when the cover is connected to the receiving chamber 120 by snap-fit, an inner wall of the receiving chamber may limit the protrusion, such that the protrusion cannot be aligned with the opening, that is, the material outlet cannot rotate relative to the cover to the first angle, but is limited to the second angle.

In an optional implementation of the present application, as shown in FIG. 8, the material outlet of the feed assembly 203 is cylindrical, and the elastic element 300 includes a spring. The material outlet is nested inside one end of the spring, and the other end of the spring abuts against the extrusion assembly 202.

As shown in FIG. 8, the elastic element 300 may be, for example, a cylindrical coil spring. Specifically, an annular protrusion matching a size of the spring may be provided in the extrusion assembly 202, and the spring may abut against the inside of the annular protrusion or the outside of the annular protrusion. Specifically, the annular protrusion may further form, with the inner wall of the receiving chamber 120, a groove for receiving the other end of the spring.

When the filament is subject to no resistance or the resistance is not large, the spring abuts against the feed assembly 203 inside the receiving chamber 120 with its own elastic force, such that the feed assembly 203 does not slide down due to self-gravity and does not move relative to the extrusion assembly 202, thereby avoid affecting a detection result. When the filament is subject to resistance or the resistance is too large, the relative motion between the feed assembly 203 and the extrusion assembly 202 compresses the spring, and when the resistance to the filament disappears, the spring resets the feed assembly 203 and the extrusion assembly 202 based on an elastic force from the compression, such that the feed assembly 203 and the extrusion assembly 202 are automatically reset after the anomalous resistance to the filament is relieved. In addition, with the spring, a shorter relative distance indicates larger resistance. Therefore, the magnitude of the resistance can be determined, such that the resistance can be detected for warning before the printing is affected, thereby preventing the impact on the print quality. Moreover, once the resistance is anomalous, as the feed assembly 203 and the extrusion assembly 202 move relative to each other, part of the filament between the feed assembly 203 and the extrusion assembly 202 can be temporarily used for printing, to provide time for timely response during high-speed printing, allowing timely response or related handling, for example, printing suspension and user notification.

In an optional implementation of the present application, the extrusion mechanism 110 includes a first extrusion wheel and a second extrusion wheel symmetrically arranged based on the filament, and the first extrusion wheel and the second extrusion wheel extrude the filament together.

In the present application, the extrusion mechanism 110 may include the first extrusion wheel and the second extrusion wheel. The first extrusion wheel and the second extrusion wheel are symmetrically arranged relative to the filament. The first extrusion wheel and the second extrusion wheel extrude the filament together, that is, both sides of the filament are extruded, to evenly pull the filament, such that the filament moves more steadily, bringing less interference on the resistance detection of the filament and more accurate results. In addition, a gap between the first extrusion wheel and the second extrusion wheel may be slightly smaller than a width of the filament, such that the filament can be fed based on a frictional force.

In an optional implementation of the present application, the trigger element 400 includes a magnetic element.

Correspondingly, the detection element 500 includes a Hall sensor configured to detect a distance to the magnetic element.

The trigger element 400 may be, for example, a magnet. The magnetic element is embedded in the feed assembly 203, that is, fixed in the feed assembly 203. Correspondingly, the detection element 500 includes the Hall sensor. Based on the Hall effect, when the magnetic element approaches a Hall detection circuit in the Hall sensor, the magnetic field changes, and an output voltage of the Hall detection circuit changes accordingly, such that a relative distance to the magnetic element can be determined based on the output voltage of the Hall detection circuit, to further determine the resistance to the filament. The magnetic element may be arranged on the protrusion on the outer side surface of the feed assembly 203. The protrusion protrudes into the sliding groove in the top opening on an outer wall of the extrusion assembly 202, to be slidably connected to the sliding groove. The Hall sensor may be arranged outside the sliding groove. The magnetic element may alternatively be embedded in the feed channel 210. To make the detection process according to the present application clear to those skilled in the art, referring to FIG. 1, an example in which the Hall sensor is the detection element 500 and the magnetic element is the trigger element 400 is used for description.

When the 3D printer is working properly, the extrusion assembly 202 pulls the filament to move. If the filament is subject to no resistance or the resistance is very small, the spring prevents the relative motion between the feed assembly 203 and the extrusion assembly 202, and the feed assembly 203 is located above the receiving chamber 120. In this case, it is detected by the Hall sensor that the relative distance to the trigger element 400 reaches the longest.

When the resistance to the filament becomes larger or too large, as the extrusion mechanism 110 moves the filament downward, a length of part of the filament between the filament spool or the feeding apparatus and the extrusion assembly 202 becomes shorter, and the feed assembly 203 moves downward accordingly and compresses the elastic element 300. The magnetic element moves as the feed assembly 203 moves, and the Hall sensor detects a position of the magnetic element to obtain a distance to the magnetic element, thereby calculating the resistance to the filament. When the resistance to the filament is different, the elastic element 300 is compressed to different lengths, corresponding to different positions of the trigger element 400 and different distances between the trigger element 400 and the Hall sensor. Therefore, the resistance to the filament can be detected based on the detected position of the trigger element 400, that is, the magnetic element. When the resistance is too large, the printing can be suspended in time for checking the cause of the abnormality. The filament can be cut off and unloaded, and then the user is notified that the resistance to the filament is too large, and the printing can be continued after returning to normal.

In an optional implementation of the present application, the trigger element 400 includes a protrusion portion (not shown in the figure).

Correspondingly, the detection element 500 includes at least one limit switch (not shown in the figure), and when the relative distance between the extrusion assembly 202 and the feed assembly 203 is a preset value, the protrusion portion touches and triggers the limit switch. In other words, the protrusion moves as the feed assembly 203 moves, and touches the limit switch when the feed assembly 203 is moving toward the extrusion assembly 202.

In practical applications, the limit switch may be used as the detection element 500, and the resistance detection is performed based on a moving position corresponding to different resistance values. The trigger element 400 includes a protrusion portion. The protrusion portion is arranged on a lateral surface of the feed assembly 203 facing the receiving chamber 120 or on a lower surface facing the extrusion mechanism 110, such that the protrusion portion can come in contact with the limit switch when the feed assembly 203 is sliding. At least one limit switch is provided, and the limit switch may be arranged on an inner side of the receiving chamber 120 along the extrusion assembly 202 and the feed assembly 203 in the direction of the filament in the feed channel 210. A plurality of limit switches may be distributed at regular intervals, or may be distributed at irregular intervals. This is not specifically limited in the present application. When the feed assembly 203 and the extrusion assembly 202 move relative to each other, and the protrusion portion touches the limit switches corresponding to different resistance (different positions of the limit switches corresponds to different resistance), the relative distance between the extrusion assembly 202 and the feed assembly 203 is a corresponding preset value, that is, the resistance to the filament reaches a corresponding resistance value.

In an optional implementation of the present application, a displacement between the extrusion assembly 202 and the feed assembly 203 may alternatively be detected by using a grating sensor. In an optional implementation of the present application, the trigger element 400 includes a metal element, and correspondingly, the detection element 500 includes an eddy current coil configured to detect a distance to the metal element.

The metal element may be arranged on the protrusion on the outer side surface of the feed assembly 203. The protrusion protrudes into the sliding groove in the top opening on the outer wall of the extrusion assembly 202, to be slidably connected to the sliding groove. The eddy current coil may be arranged outside the sliding groove. The metal element may alternatively be embedded in the feed channel 210.

In an optional implementation of the present application, the detection element 500 includes a force sensor (not shown in the figure), the elastic element 300 may alternatively not be arranged, and the trigger element 400 is a protrusion. Correspondingly, a position relationship between the extrusion assembly 202 and the feed assembly 203 may be fixed, and the two abut against each other via the protrusion and the force sensor. When the resistance increases or becomes too large, the extrusion assembly 202 generates pressure to the force sensor on the feed assembly 203 via the protrusion, to indicate the resistance to the filament.

In an optional implementation of the present application, the detection element 500 includes a force sensor (not shown in the figure), the trigger element 400 may alternatively not be arranged, and the elastic element 300 abuts against the force sensor. The resistance is detected by detecting an elastic force of the spring.

A type of the force sensor includes, but is not limited to, a strain tube type, a diaphragm type, and a strain beam type. This is not limited in the present application.

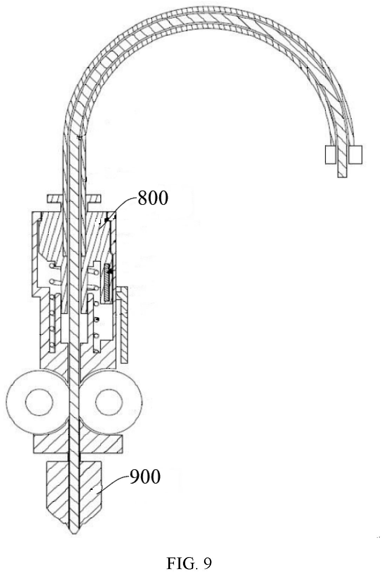

Referring to FIG. 9, a structural schematic view of a printing head of a three-dimensional printer according to the present application is shown, and the printing head of the three-dimensional printer includes a filament resistance detection apparatus 800 and a hot end 900 as described above.

An extrusion mechanism of the filament resistance detection apparatus 800 is configured to drive a filament to be fed to the hot end 900.

A feed assembly 203 of the filament resistance detection apparatus 800 is configured to receive a filament from a feeding apparatus.

The hot end 900 is configured to heat up a filament in the hot end 900 to a molten state, and is further configured to extrude the filament in the molten state for three-dimensional model printing.

In the descriptions of the present application, it should be understood that, the terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the accompanying drawings. They are merely for the convenience of describing the present application and simplifying the description, rather than indicating or implying that the apparatus or element referred to must have a specific orientation or be constructed and operated in the specific orientation, and thus should not be construed as a limitation to the present application.

In the descriptions of the present application, "a first feature" or "a second feature" may include one or more of these features.

In the descriptions of the present application, "plurality/multiple" refers to two or more.

In the descriptions of the present application, a first feature being "on" or "under" a second feature may include the first and second features being in direct contact, and may also include the first and second features being not in direct contact, but in contact via another feature between them.

In the descriptions of the present application, a first feature being "on", "above", and "over" a second feature includes the first feature being right above and obliquely above the second feature, or simply indicates that the first feature is at a higher horizontal level than the second feature.

In the descriptions of the present application, the description of reference terms such as "one embodiment", "some embodiments", "a schematic embodiment", "an example", "a specific example", or "some examples" means that a specific feature, structure, material, or characteristic described in conjunction with the embodiment or example is included in at least one embodiment or example of the present application. In this specification, schematic representations of the foregoing terms do not necessarily refer to the same embodiment or example. Moreover, the specific feature, structure, material, or characteristic described may be combined in a suitable manner in any one or more embodiments or examples.

Although the embodiments of the present application have been illustrated and described, those of ordinary skill in the art will appreciate that various changes, modifications, replacements, and variations can be made to these embodiments without departing from the principle and purpose of the present application, and the scope of the present application is defined by the claims and equivalents thereof.

## Claims

1. A filament feeding apparatus for a 3D printer, comprising:
a filament housing;
a fixed tube and a sliding block, wherein the fixed tube is mounted to the filament housing, one end of the fixed tube is connected to one end of a feed tube, the other end of the feed tube is connected to a feed assembly, the sliding block is slidably mounted to the filament housing, a buffer chamber interconnected to the fixed tube is formed within the sliding block, one end of the sliding block distal to the feed tube is further connected to one end of an extrusion tube interconnected to the buffer chamber, and the other end of the extrusion tube is coupled to an extrusion assembly; and
a first elastic member and a second elastic member, wherein a coefficient of elasticity of the first elastic member is greater than a coefficient of elasticity of the second elastic member,
wherein the first elastic member abuts against the fixed tube and a side of the sliding block facing the feed tube in between, and the second elastic member abuts against the filament housing and a side of the sliding block facing the extrusion tube in between, or both the first elastic member and the second elastic member are arranged between the fixed tube and the sliding block, and the first elastic member is nested inside the second elastic member.

2. The filament feeding apparatus for a 3D printer according to claim 1, further comprising: a first detection member and a first trigger piece, wherein the first detection member is arranged on one of the filament housing and the sliding block, the first trigger piece is arranged on the other of the sliding block and the filament housing, and the first detection member is configured to detect a relative distance to the first trigger piece or a change in the relative distance, to detect a relative distance between the extrusion assembly and the feed assembly or a change in the relative distance.

3. The filament feeding apparatus for a 3D printer according to claim 1 or 2, wherein the first elastic member is in a compressed state, and/or the second elastic member is in a compressed state.

4. The filament feeding apparatus for a 3D printer according to any one of claims 1 to 3, wherein in a case that the first elastic member is nested inside the second elastic member, a sliding distance exists between the sliding block and the filament housing.

5. The filament feeding apparatus for a 3D printer according to any one of claims 1 to 4, further comprising a second detection member and a second trigger piece, wherein
the second detection member is fixed relative to the fixed tube, and the second trigger piece is movably mounted to the fixed tube in a direction perpendicular to an axial direction of the fixed tube and at least partially extends into the fixed tube,
wherein a filament is fed in the fixed tube along the axial direction of the fixed tube.

6. The filament feeding apparatus for a 3D printer according to claim 5, wherein the second detection member is configured to detect a relative distance to the second trigger piece or a change in the relative distance, to detect whether the filament enters the fixed tube.

7. The filament feeding apparatus for a 3D printer according to claim 5 or 6, further comprising an elastic reset member, wherein one end of the elastic reset member is fixed relative to the fixed tube, and the other end of the elastic reset member is connected to the second trigger piece.

8. The filament feeding apparatus for a 3D printer according to any one of claims 5 to 7, wherein the second trigger piece is formed with a sloping push portion, the sloping push portion extends into the fixed tube, the sloping push portion is formed with a sloping push surface, and the sloping push surface is arranged as sloping along a direction of filament feeding.

9. The filament feeding apparatus for a 3D printer according to any one of claims 1 to 8, further comprising a press-fit connector, wherein the press-fit connector is configured to connect the sliding block and the extrusion tube, the press-fit connector comprises a press-to-release portion, the filament housing is provided with an exposed opening along an axial direction of the extrusion tube, and a diameter of the exposed opening is greater than a diameter of the press-to-release portion.

10. The filament feeding apparatus for a 3D printer according to claim 9, wherein the sliding block is further provided with a push lug, and the push lug extends out of the filament housing along a direction perpendicular to the axial direction of the extrusion tube.

11. The filament feeding apparatus for a 3D printer according to any one of claims 1 to 10, wherein the filament housing is further formed with limiting ribs, the limiting ribs are in two groups and spaced apart from each other, and the sliding block is limited between the two groups of limiting ribs and is slidable along the limiting ribs.

12. The filament feeding apparatus for a 3D printer according to claim 11, wherein each group of the limiting ribs comprises a first rib and a second rib, and the first rib and the second rib are spaced apart from each other along a sliding direction of the sliding block and form an in-between gap, wherein the sliding block suitably slides in from an end of the second rib distal to the first rib, and a sum of an extension length of the first rib and a length of the in-between gap is less than an extension length of the sliding block.

13. The filament feeding apparatus for a 3D printer according to any one of claims 1 to 12, wherein the filament housing is further provided with a first limiting portion, and the sliding block, when moving toward the feed tube and reaching a limit position, presses against the first limiting portion.

14. The filament feeding apparatus for a 3D printer according to claim 13, wherein the first limiting portion is configured as a triangular block and is formed with an avoidance slope, and the avoidance slope is configured as sloping along a feeding direction of the fixed tube.

15. The filament feeding apparatus for a 3D printer according to any one of claims 2 to 14, wherein the first trigger piece has a first sensing end and a second sensing end, the first sensing end and the second sensing end are spaced apart from each other along the sliding direction of the sliding block, and the first detection member is located between the first sensing end and the second sensing end, wherein the first detection member generates a first tangling signal when the sliding block moves toward the feed tube and reaches the limit position, and the first detection member generates a second tangling signal when the sliding block moves toward the extrusion tube and reaches a limit position.

16. A 3D printer, comprising a feed assembly, an extrusion assembly, and the filament feeding apparatus for a 3D printer according to any one of claims 1 to 15, wherein the feed assembly is interconnected to the feed tube, and the extrusion assembly is interconnected to the extrusion tube.

17. The 3D printer according to claim 16, further comprising a control module, wherein the feed assembly is provided with a feeding driving member, and the extrusion assembly is provided with an extrusion driving member,
wherein the control module is configured to control an action of the feeding driving member and/or the extrusion driving member.

18. The 3D printer according to claim 16 or 17, wherein two filament feeding apparatuses for a 3D printer are provided, and the two filament feeding apparatuses for a 3D printer are arranged side by side.

19. The 3D printer according to any one of claims 16 to 19, further comprising an enclosure, wherein the filament feeding apparatuses for a 3D printer are located on an inner side of the enclosure.

20. The 3D printer according to claim 19, wherein the enclosure is provided with a door for opening up and closing, the sliding block is provided with a push lug, and the push lug protrudes toward the door.
